# EUROPÄISCHE PATENTSCHRIFT

(11) **EP 1 705 410 B1**
(45) Veröffentlichungstag und Bekanntmachung des Hinweises auf die Patenterteilung: **17.10.2007**
(21) Anmeldenummer: 05006528.3
(22) Anmeldetag: 24.03.2005
(51) Int. Cl.: F16K 5/10, G05D 7/06, G05G 7/04

(54) **Drosselventil**
Throttle valve
Soupape d'étranglement

(43) Veröffentlichungstag der Anmeldung: 27.09.2006
(73) Patentinhaber: Festo AG & Co., 73734 Esslingen (DE)
(72) Erfinder: Quendt, Volker, 72669 Unterensingen (DE); Packe, Stephan, 76760 Ostfildern (DE)
(74) Vertreter: Abel, Martin

(56) Entgegenhaltungen:
- GB-A- 302 327
- GB-A- 791 945
- US-A- 4 080 156

## Beschreibung

Die Erfindung betrifft ein Drosselventil, mit einem Ventilgehäuse, das einen Drosselkanal enthält, bezüglich dem ein Drosselglied unter Ausführung einer die Drosselungsintensität beeinflussenden Einstellbewegung verstellbar ist, mit Grobeinstellmitteln und Feineinstellmitteln zur Grob- und Feineinstellung der Drosselungsintensität, die einstellungsmäßig auf das gleiche Drosselglied wirken und bei vorgenommener Grobpositionierung des Drosselgliedes eine darauf basierende Feinpositionierung des Drosselgliedes ermöglichen, wobei das Drosselglied an einem Drosselgliedträger fein verstellbar gelagert ist und der Drosselgliedträger, unter Mitnahme des Drosselgliedes, bezüglich des Ventilgehäuses grob verstellbar gelagert ist.

Ein aus der EP 1336789 B1 bekanntes Drosselventil verfügt über ein Ventilgehäuse, in dem ein Drosselkanal verläuft, dem Grobeinstellmittel und Feineinstellmittel zugeordnet sind, um eine Grob- und Feineinstellung des von einem Fluid durchströmbaren Drosselungsquerschnittes und mithin der realisierbaren Drosselungsintensität vornehmen zu können. Die Grobeinstellmittel ermöglichen ein stufenweises Umschalten zwischen verschiedenen Drosselungsstufen mit unterschiedlichen Drosselungsquerschnitten. Hierzu enthalten die Grobeinstellmittel eine Grobeinstellungs-Drosseleinrichtung mit einem Drehglied, das mehrere unterschiedlich große Drosseldurchgänge aufweist, die wahlweise im Strömungsverlauf des Fluides positionierbar sind. Die Feineinstellmittel beinhalten eine eigenständige Feineinstellungs-Drosseleinrichtung, die der Grobeinstellungs-Drosseleinrichtung parallelgeschaltet ist und insbesondere einen zum jeweils wirksamen Drosseldurchgang der Grobeinstellungs-Drosseleinrichtung parallelgeschalteten Fluidkanal aufweist, in dessen Verlauf eine fein justierbare Drosselschraube angeordnet ist. Auf diese Weise kann ein großes Drosselungsspektrum mit hoher Genauigkeit abgedeckt werden, wobei die Grobeinstellmittel eine stufenweise Grobeinstellung und die Feineinstellmittel eine darauf basierende Feinjustierung der gewünschten Drosselungsintensität ermöglichen. Angestrebt ist eine Auslegung, bei der der Einstellbereich der Feineinstellungs-Drosseleinrichtung genau die Querschnittsdifferenz zwischen den größenmäßig jeweils aufeinanderfolgenden Drosselungsstufen der Grobeinstellungs-Drosseleinrichtung abdeckt.

Das bekannte Drosselventil ist zwar bequem und exakt einstellbar. Allerdings hat sich gezeigt, dass sich ein Betrieb des Drosselventils in Verbindung mit unterschiedlichen Druckdifferenzen ungünstig auf das Einstellungsergebnis auswirkt. Ist beispielsweise in Verbindung mit einer niedrigen Druckdifferenz eine exakte Überbrückung zweier aufeinanderfolgender Drosselungsstufen durch die Feineinstellungs-Drosseleinrichtung gewährleistet, kann bei einer höheren Druckdifferenz der in Verbindung mit der Feineinstellungs-Drosseleinrichtung realisierbare Durchflusswert über demjenigen der nächstfolgenden Drosselungsstufe der Grobeinstellungs-Drosseleinrichtung liegen, sodass beim Umschalten auf diese nächste Drosselungsstufe ein nicht reproduzierbarer Sprung im erhaltenen Durchflusswert auftritt, was letztlich die Einstellungsmaßnahmen sehr beeinträchtigt. Dieses Phänomen ist insbesondere bei einem Betrieb des Drosselventils mit Druckluft oder einem anderen Gas festzustellen und kann daher wohl auf die Kompressibilität dieser Medien zurückgeführt werden.

Die DE 19932982 C2 beschreibt ein Drosselventil, bei dem unterschiedliche Drosselungsintensitäten durch die Einstellung eines Drosselgliedes vorgegeben werden können, das durch einen Schraubvorgang verstellbar ist, wobei zur lösbaren Fixierung in unterschiedlichen Positionen Rastmittel vorhanden sein können. Eine kombinierte Grob- und Feineinstellung ist jedoch nicht möglich. Um in Verbindung mit einer hohen Einstellgenauigkeit ein weitreichendes Einstellspektrum zu erhalten, bedarf es daher eines großen Gewinde-Verstellbereiches und einer Vielzahl von Umdrehungen der Einstellmimik, was zeitraubende Einstellvorgänge zur Folge hat und der Reproduzierbarkeit der Einstellungen abträglich ist.

Ein aus der GB 791 945 bekanntes Drosselventil der eingangs genannten Art ist mit Grobeinstellmitteln und mit Feineinstellmitteln ausgestattet, die beide auf ein und das selbe Drosselglied einwirken. Sowohl die Grobeinstellmittel als auch die Feineinstellmittel sind als Gewindeverbindungen ausgeführt, die sich allerdings in ihren Gewindesteigungen voneinander unterscheiden. Das Drosselventil besitzt ein Ventilgehäuse, das einen zwischen zwei Anschlüssen verlaufenden Drosselkanal enthält, bezüglich dem das Drosselglied zur Veränderung der Drosselungsintensität verstellbar ist. Die sich auf die Drosselungsintensität auswirkende Bewegung sei als Einstellbewegung bezeichnet und ist eine Linearbewegung. Für die Grobeinstellung sitzt das Drosselglied an einem Drosselgliedträger, der bezüglich des Ventilgehäuses und mithin bezüglich des Drosselkanals über ein Gewinde mit großer Steigung grob verstellbar ist. Bei der Grobverstellung wird das Drosselglied mitgenommen. Jedoch ist die Verbindung zwischen dem Drosselglied und dem Drosselgliedträger mittels eines Gewindes mit kleiner Steigung so ausgebildet, dass zusätzlich eine Feinverstellung des Drosselgliedes bezüglich des Drosselgliedträgers ausführbar ist. Insgesamt wird also die Grobeinstellung durch eine Schraubverstellung des das Drosselglied tragenden Drosselgliedträgers bezüglich des Ventilgehäuses vorgenommen und die Feineinstellung durch ein Verschrauben des Drosselgliedes bezüglich des es tragenden Drosselgliedträgers.

Vergleichbare Verhältnisse liegen bei den in der GB 302 327 und der US 4 080 156 beschriebenen Vorrichtungen vor. Auch dort ist das Drosselglied über ein Gewinde mit kleiner Steigung an einem Drosselgliedträger gelagert, der seinerseits über ein Gewinde mit größerer Steigung am Ventilgehäuse befestigt ist.

Es ist die Aufgabe der vorliegenden Erfindung, ein Drosselventil der eingangs genannten Art zu schaffen, mit dem sich unabhängig von der anstehenden Druckdifferenz auf einfache Weise exakte Einstellungen vornehmen lassen.

Zur Lösung dieser Aufgabe ist bei einem mit Grobeinstellmitteln und Feineinstellmitteln ausgestatteten Drosselventil vorgesehen, dass zumindest die Grobeinstellmittel zur stufenweisen Grobeinstellung des Drosselgliedes ausgebildet sind, indem der Drosselgliedträger relativ zum Ventilgehäuse in Richtung der Einstellbewegung abgestuft in mehreren unterschiedlichen Axialpositionen positionierbar ist, wobei der Drosselgliedträger relativ zum Ventilgehäuse in Richtung der Einstellbewegung linear verschiebbar und bezüglich der zugehörigen Bewegungsachse verdrehbar ist, wobei zur Grobeinstellung eine sich entlang des Außenumfanges des Drosselgliedträgers erstreckende, axial orientierte, gehäusefeste Stufenkontur vorhanden ist, der ein umfangsseitig am Drosselgliedträger angeordneter Anschlag axial gegenüberliegt, wobei der Anschlag zur Vorgabe unterschiedlicher Grobpositionen durch Drehen des Drosselgliedträgers wahlweise gegenüberliegend unterschiedlichen Stufenflächen der Stufenkontur positionierbar ist.

Wird dieses Drosselventil in Verbindung mit unterschiedlichen Druckdifferenzen betrieben, entsprechen die getroffenen Einstellungen zwar auch unterschiedlichen Durchflusswerten. Es ist jedoch gewährleistet, dass die zwischen zwei Grobpositionen liegende Durchflussdifferenz unabhängig von der Druckdifferenz in reproduzierbarer Weise durch die Feineinstellmittel abgedeckt werden kann. Man kann also bei Bedarf über die Feineinstellmittel exakte "Anschlüsse" zwischen den den einzelnen Grobpositionen entsprechenden Durchflusswerten realisieren, wobei durch die Feineinstellung stets die Differenz zwischen zwei Grobpositionen überbrückbar ist. Anders als beim Stand der Technik wird hierbei die gewünschte Drosselungsintensität nicht durch die Parallelschaltung verschiedener Strömungsquerschnitte erzielt, sondern durch die Variation nur eines, von dem Drosselglied beherrschten Drosselquerschnittes, wobei sowohl die Grobeinstellmittel als auch die Feineinstellmittel letztlich auf ein und dasselbe Drosselglied wirken.

Der Drosselgliedträger ist im Rahmen einer Kombination aus Drehbewegung und linearer Einstellbewegung relativ zum Ventilgehäuse verstellbar. Zur Vorgabe unterschiedlicher Drosselungsstufen durch die Grobeinstellung ist der Drosselgliedträger relativ zum Ventilgehäuse in Richtung der Einstellbewegung abgestuft in mehreren unterschiedlichen Axialpositionen positionierbar. Eine besonders bequeme und zugleich sichere Einstellung unterschiedlicher grober Drosselungsstufen ist möglich, weil der Drosselgliedträger relativ zum Ventilgehäuse in Richtung der Einstellbewegung linear verschiebbar und bezüglich der zugehörigen Bewegungsachse verdrehbar ist, wobei zur Grobeinstellung eine sich entlang des Außenumfanges des Drosselgliedträgers erstreckende, axial orientierte, gehäusefeste Stufenkontur vorhanden ist, der ein umfangsseitig am Drosselgliedträger angeordneter, insbesondere radial vorstehender Anschlag axial gegenüberliegt. Durch Drehen des Drosselgliedträgers kann der Anschlag wahlweise gegenüberliegend unterschiedlichen Stufenflächen der Stufenkontur positioniert werden, was dann jeweils bezüglich der Bewegungsachse unterschiedliche Axialpositionen des Drosselgliedträgers und somit auch des daran angeordneten Drosselgliedes zur Folge hat.

Vorteilhafte Weiterbildungen der Erfindung gehen aus den Unteransprüchen hervor.

Zur Vorgabe der den verschiedenen Drosselungsintensitäten entsprechenden Drosselungsquerschnitte ragt das Drosselglied je nach Einstellung zweckmäßigerweise unterschiedlich weit in den zugeordneten Drosselkanal hinein. Dabei kann der in den Drosselkanal eintauchende Drosselungsabschnitt des Drosselgliedes sich verjüngend ausgebildet sein und insbesondere den Endabschnitt des Drosselgliedes bilden.

Zur Realisierung der Feineinstellmittel steht das Drosselglied mit dem Drosselgliedträger zweckmäßigerweise in einem Gewindeeingriff. Der Feineinstellvorgang ist dann ein Schraubvorgang, wobei die hervorgerufene Drehbewegung eine lineare Einstellbewegung hervorruft. Die Gewindeverbindung wird hier zweckmäßigerweise mit einem sogenannten Feingewinde realisiert, das eine relativ geringe Gewindesteigung aufweist.

Der Verdrehbereich des Drosselgliedes bezüglich des Drosselgliedträgers ist zweckmäßigerweise auf maximal eine Umdrehung beschränkt. Dadurch kann, insbesondere in Verbindung mit entsprechenden Ablesemitteln wie Skala und Zeiger, stets eine reproduzierbare Einstellung vorgenommen werden.

Um bei der Grobeinstellung bestimmte unterschiedliche Drosselungsintensitäten reproduzierbar vorgeben zu können, kann eine lösbare Rastverbindung zwischen dem Drosselgliedträger und dem Ventilgehäuse oder einem ventilgehäusefesten Bauteil vorgesehen sein. Allerdings ist eine Einstellung auch allein auf der Basis geeigneter Ablesemittel, beispielsweise Skala und Zeiger, grundsätzlich möglich.

Zweckmäßigerweise sind Federmittel vorhanden, durch die der Anschlag ständig in Richtung der Stufenkontur und mithin auch der jeweils ausgewählten Stufenfläche vorgespannt ist. Prinzipiell könnte diese Vorspannung jedoch auch unter Verzicht auf eine mechanische Federeinrichtung allein durch den anstehenden Fluiddruck bewirkt werden.

Die Stufenkontur ist zweckmäßigerweise Bestandteil eines am Ventilgehäuse angeordneten Drehlagerringes, der den Drosselgliedträger bei gleichzeitiger drehbarer Lagerung koaxial umschließt.

Damit sich bei der Grobeinstellung bestimmte Drosselungsstufen mühelos auffinden lassen, kann auf der der Stufenkontur axial entgegengesetzten Seite des Anschlages eine gehäusefeste Positionierstruktur vorhanden sein, die ebenfalls mit dem Anschlag zusammenwirkt. Zum Umschalten auf eine andere Drosselungsintensität wird hier der Drosselgliedträger im axial gedrückten Zustand verdreht, bis der Anschlag an einem von der Positionierstruktur definierten Gegenanschlag zur Anlage gelangt, welcher so platziert ist, dass der daran anliegende Anschlag einer bestimmten Stufenfläche der Stufenkontur axial gegenüberliegt. Wird der Drosselgliedträger dann losgelassen, kann sich der Anschlag zur Anlage an der betreffenden Stufenfläche bewegen.

Auch die Positionierstruktur ist zweckmäßigerweise Bestandteil eines im Ventilgehäuse fixierten, den Drosselgliedträger koaxial umschließenden Ringes. Dieser Ring kann durch den koaxial vorgelagerten Drehlagerungsring axial fixiert sein.

Das Gehäuse des Drosselventils kann nach Art einer sogenannten Schwenkverschraubung ausgebildet sein. Es verfügt dann zweckmäßigerweise über einen die Grob- und Feineinstellmittel aufweisenden und mit mindestens einem Fluidanschluss ausgestatteten Grundkörper sowie über ein an dem Grundkörper drehbar gelagertes, mindestens einen anderen Anschluss aufweisendes Schwenkteil. Ebenfalls möglich ist es, einen die Drosselstelle umgehenden Umgehungskanal vorzusehen, der mit Rückschlagventilmitteln versehen ist. Auf diese Weise liegt insgesamt ein einstellbares Drosselventil mit Rückschlagventil vor.

Nachfolgend wird die Erfindung anhand der beiliegenden Zeichnung näher erläutert. In dieser zeigen:
- Fig. 1: eine bevorzugte erste Bauform des erfindungsgemäßen Drosselventils in perspektivischer Darstellung,
- Fig. 2: das Drosselventil aus Figur 1 mit längsgeschnittenem Gehäuse und leicht gekippt, wobei eine Einstellung des Drosselgliedes gezeigt ist, bei der der Fluiddurchgang komplett abgesperrt ist,
- Fig. 3: einen reinen Längsschnitt durch das Drosselventil aus Fig. 1 bei mit der Fig. 2 übereinstimmender Einstellung, wobei strichpunktiert eine durch Feineinstellung erhältliche andere Drosselposition des Drosselgliedes angedeutet ist,
- Fig. 4: die Anordnung aus Fig. 3, wobei hier allerdings auch der Bereich der Grob- und Feineinstellmittel komplett geschnitten dargestellt ist,
- Fig. 5: das Drosselventil aus Fig. 1 in einer der Fig. 2 entsprechenden Darstellungsweise, wobei allerdings eine einer anderen Drosselungsintensität entsprechende Drosselposition des Drosselgliedes gezeigt ist, die durch eine von den vorgenannten Figuren abweichende Grob- und Feineinstellung erhalten wurde, und
- Fig. 6: ein eine bevorzugte Bedienungscharakteristik der beispielsgemäßen Drosselventile wiedergebendes Diagramm.

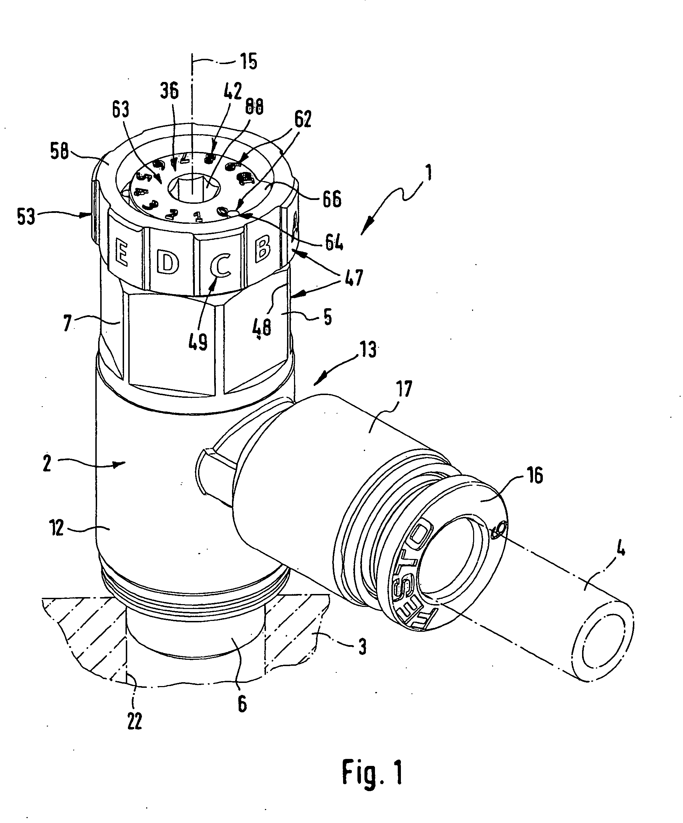

Das in seiner Gesamtheit mit Bezugsziffer 1 bezeichnete Drosselventil ist insgesamt so ausgelegt, dass es in die Verbindung zwischen einem in Fig. 1 schematisch angedeuteten fluidtechnischen Bauteil 3 und einer ebenfalls nur in Fig. 1 angedeuteten Fluidleitung 4 einschaltbar ist. Bei dem fluidtechnischen Bauteil 3 handelt es sich beispielsweise um einen fluidbetätigten Antrieb oder ein Ventil. Die Fluidleitung 4 kann starr oder flexibel sein. Durch das Drosselventil 1 kann eine fluidische Verbindung zwischen dem fluidtechnischen Bauteil 3 und der Fluidleitung 4 hergestellt werden. Obwohl sich das Drosselventil auch für hydraulische Anwendungen eignet, ist es im Besonderen für einen Betrieb mit gasförmigen Medien, insbesondere mit Druckluft, zu empfehlen.

Das Drosselventil 1 besitzt ein Ventilgehäuse 2 mit einem durchgehend hohl ausgebildeten länglichen Grundkörper 5, der zweckmäßigerweise als Hohlschraube ausgeführt ist. An seinem in der Zeichnung nach unten weisenden fußseitigen Endabschnitt ist der Grundkörper 5 mit einem ein Außengewinde aufweisenden zylindrischen Befestigungsabschnitt 6 versehen, der in eine Gewindebohrung des fluidtechnischen Bauteils 3 eingeschraubt werden kann. Der in der Zeichnung oben liegende kopfseitige Endabschnitt 7 besitzt außen eine Mehrkantkontur oder ist in anderer Weise so ausgebildet, dass sich ein Schraubwerkzeug ansetzen lässt, mit dem sich die Schraubbefestigung am fluidtechnischen Bauteil 3 unterstützen lässt.

Alternativ kann der Befestigungsabschnitt 6 auch für andere Befestigungsarten ausgelegt sein. Es besteht ferner die Möglichkeit, das Drosselventil 1 für eine direkte Integration in ein fluidtechnisches Bauteil 3 zu konzipieren, wobei dann der Grundkörper 5 sogar ein unmittelbarer Bestandteil des fluidtechnischen Bauteils 3 sein kann.

Zwischen dem Befestigungsabschnitt 6 und dem kopfseitigen Endabschnitt 7 befindet sich ein weiterer Längenabschnitt des Grundkörpers 5, der im Folgenden als Lagerungsabschnitt 8 bezeichnet sei. Auf diesem sitzt koaxial ein ring- oder hülsenähnlich gestalteter Lagerkörper 12, der Bestandteil eines Schwenkteils 13 des Ventilgehäuses 2 ist, welches relativ zum Grundkörper 5 beliebig verdrehbar ist. Die Drehachse fällt mit der Längsachse 15 des Grundkörpers 5 zusammen. Beim Verdrehen des Schwenkteils 13 dreht sich der Lagerkörper 12 auf dem Lagerungsabschnitt 8 des Grundkörpers 5.

Das Schwenkteil 13 ist zum Anschließen der Fluidleitung 4 ausgelegt. Es besitzt einen quer zur Längsachse 15 des Grundkörpers 5 verlaufenden Anschlussstutzen 17, der mit Anschlussmitteln 16 ausgestattet ist, in den die anzuschließende Fluidleitung 4 einsteckbar ist. Nicht näher gezeigte Haltemittel und Dichtungsmittel gewährleisten eine lösbare, abgedichtete Fixierung der eingesteckten Fluidleitung 4. Abweichend vom Ausführungsbeispiel könnten die Anschlussmittel 16 auch auf einem anderen Funktionsprinzip beruhen.

Beim Einsatz des Drosselventils 1 hat der Anwender die Möglichkeit, den Anschlussstutzen 17 winkelmäßig entlang des Umfanges des Grundkörpers 5 so zu positionieren, dass er hinsichtlich der anzuschließenden Fluidleitung 4 eine optimale Ausrichtung besitzt. Das Drosselventil 1 kann jedoch auch in einer Bauform ohne Schwenkteil realisiert werden. In diesem Falle wäre dann der Anschlussstutzen 17 drehfest und insbesondere einstückig mit dem Grundkörper 5 verbunden.

Auch lässt sich das Drosselventil 1 mit anderer relativer Ausrichtung des Befestigungsabschnittes 6 und der Anschlussmittel 16 ausführen. Möglich wäre insbesondere eine Ausgestaltung, bei der diese Komponenten in einer Linie platziert sind. Im Übrigen könnte das Drosselventil 1 auch so eingesetzt werden, dass sowohl am Befestigungsabschnitt 6 als auch an den Anschlussmitteln 16 je eine Fluidleitung anschließbar ist.

Ein Längenabschnitt des den Grundkörper 5 durchziehenden Hohlraumes bildet einen ersten Anschlusskanal 23a, der einenends an der Stirnseite des Befestigungsabschnittes 6 ausmündet und im am fluidtechnischen Bauteil 3 montierten Zustand mit einem darin ausgebildeten, in Figur 1 angedeuteten Druckmittelkanal 22 kommuniziert. Ein weiterer, zweiter Anschlusskanal 23b durchsetzt das Schwenkteil 13 und mündet im Bereich der Anschlussmittel 16 aus, sodass er bei angeschlossener Fluidleitung 4 mit dieser in Verbindung steht.

Die beiden Anschlusskanäle 23a, 23b stehen unter funktioneller Zwischenschaltung einer Drosseleinrichtung 24 im Innern des Grundkörpers 5 miteinander in fluidischer Verbindung.

Durch diese Drosseleinrichtung 24 ist es möglich, die Durchflussrate, mit der das Fluid zwischen den beiden Anschlusskanälen 23a, 23b überströmt, variabel einzustellen.

Der erste Anschlusskanal 23a endet mit einem in Richtung der Längsachse 15 orientierten, im Folgenden als Drosselkanal 25 bezeichneten Kanalabschnitt im Innern des Grundkörpers 5. An ihn schließt sich ein als Aufnahmeabschnitt 26 bezeichneter Längenabschnitt des den Grundkörper 5 durchziehenden Hohlraumes an, der stirnseitig am kopfseitigen Endabschnitt 7 ausmündet und Komponenten der Drosseleinrichtung 24 aufnimmt.

Der zweite Anschlusskanal 23b kommuniziert in dem sich an den Drosselkanal 25 anschließenden Bereich mit dem Aufnahmeabschnitt 26. Dort münden in den Aufnahmeabschnitt 26 mehrere den Grundkörper 5 radial durchsetzende Querkanäle 27 ein, die radial außen mit einer zwischen dem Außenumfang des Grundkörpers 5 und dem Innenumfang des Lagerkörpers 12 definierten Ringraum 29 kommunizieren, in den auch der zweite Anschlusskanal 23b einmündet. Auf diese Weise besteht bei jeder Winkelstellung des Schwenkteils 13 eine fluidische Verbindung zwischen dem zweiten Anschlusskanal 23b und dem dem Drosselkanal 25 vorgelagerten Bereich des Aufnahmeabschnittes 26.

Die in dem Aufnahmeabschnitt 26 angeordneten Komponenten der Drosseleinrichtung 24 enthalten unter anderem ein bevorzugt stößelartig ausgebildetes Drosselglied 28, das sich in dem Aufnahmeabschnitt 26 koaxial erstreckt, wobei seine Längsachse 32 mit derjenigen (15) des Grundkörpers 5 zusammenfällt. Das Drosselglied 28 ist unter Ausführung einer mit der Achsrichtung der Längsachse 32 gleichgerichteten, durch einen Doppelpfeil angedeuteten Einstellbewegung 34 relativ zum Ventilgehäuse 2 und somit auch relativ zu dem Drosselkanal 25 verstellbar, wobei es entsprechend der jeweiligen Axialposition - im Folgenden "Drosselungsposition" genannt - mit einem an dem dem Drosselkanal 25 zugewandten Endbereich vorgesehenen Drosselungsabschnitt 33 mehr oder weniger weit in den Drosselkanal 25 eintaucht.

In Abhängigkeit von der Eintauchtiefe definiert der Drosselungsabschnitt 33 mit der Wandung des Drosselkanals 25 unterschiedlich große, als Drosselungsquerschnitte bezeichnete Strömungsquerschnitte für das zwischen den beiden Anschlusskanälen 23a, 23b überströmende Fluid. Hierzu besitzt der Drosselungsabschnitt 33 beim Ausführungsbeispiel eine sich zu seinem freien Ende hin verjüngende Gestalt. Der Drosselungsquerschnitt wird mithin von einem Ringspalt 31 zwischen dem Außenumfang des Drosselungsabschnittes 33 und der Wandung des Drosselkanals 25 definiert, dessen Breite mit zunehmender Eintauchtiefe des Drosselungsabschnittes 33 abnimmt.

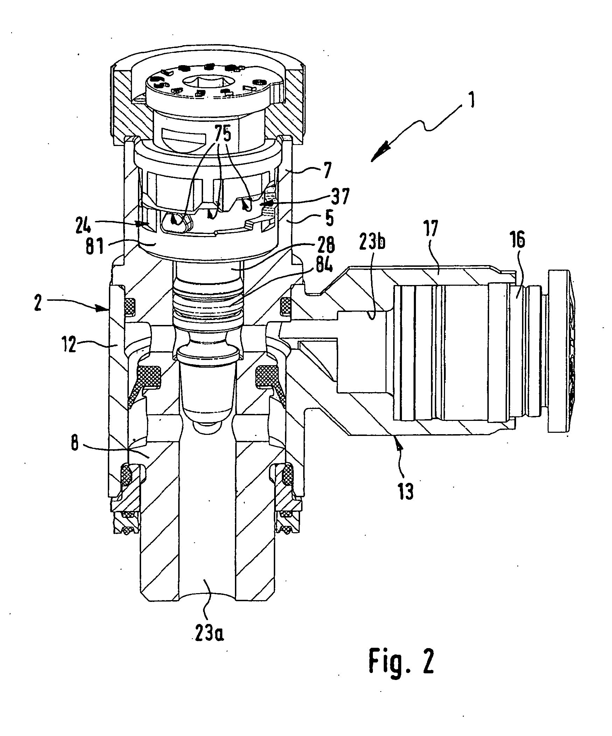

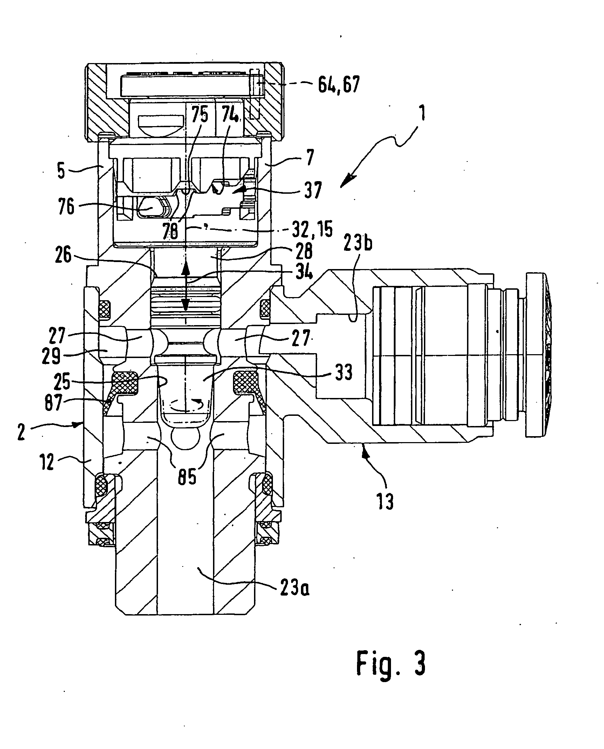

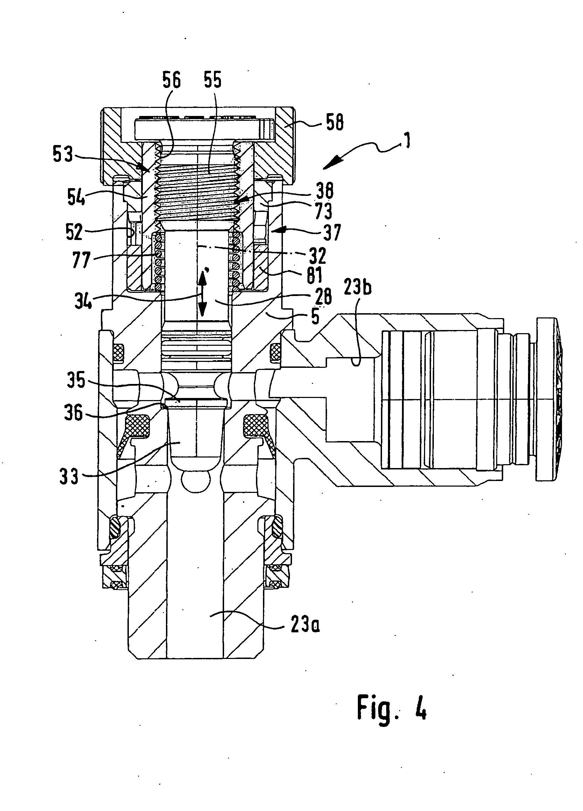

Bevorzugt ist der Drosselungsabschnitt 33 so ausgebildet, dass er in einer bestimmten, aus Fig. 2 bis 4 hervorgehenden Drosselungsposition den Fluiddurchgang durch den Drosselkanal 25 vollständig absperrt. Diese Drosselungsposition entspricht dann einer Absperrstellung. Um dies zu ermöglichen, besitzt der Drosselungsabschnitt 33 beim Ausführungsbeispiel einen radial vorspringenden umlaufenden Bund 35, der in der Absperrstellung nach Art eines Sitzventils an einem ringförmigen Ventilsitz 36 zur Anlage gelangt, der vom Übergangsbereich zwischen dem Drosselkanal 25 und dem sich daran mit größerem Durchmesser anschließenden Aufnahmeabschnitt 26 definiert ist.

Um die gewünschte Drosselungsposition einstellen zu können, enthält die Drosseleinrichtung 24 zum einen Grobeinstellmittel 37 und zum anderen Feineinstellmittel 38, die beide einstellungsmäßig auf das einzige vorhandene Drosselglied 28 wirken und eine Grob- und Feineinstellung der Drosselungsintensität ermöglichen. Man kann somit das Drosselglied 28 zunächst grob positionieren, um dann ausgehend von der eingestellten Grobposition durch Feinpositionierung die gewünschte Drosselungsintensität exakt einzustellen. Sowohl bei der Grobeinstellung als auch bei der Feineinstellung findet eine Einstellbewegung 34 des Drosselgliedes 28 statt. Bei der Grobeinstellung kann diese Einstellbewegung jedoch gröber und mithin zum Erhalt größerer Querschnittsänderungen schneller ausgeführt werden als durch die Feineinstellmittel, mit denen dann nur noch bei entsprechend großer Untersetzung eine kurze Einstellstrecke abgedeckt werden muss.

Die Grobeinstellmittel 37 sind zur stufenweisen Grobeinstellung des Drosselgliedes 28 ausgebildet. Die Feineinstellmittel 38 hingegen ermöglichen eine stufenlose Feineinstellung. Die Auslegung ist insgesamt so getroffen, dass die verschiedenen Grobpositionen in der im Folgenden als Einstellrichtung bezeichneten Richtung der Einstellbewegung 34 untereinander den gleichen Abstand haben und sich von Grobposition zu Grobposition eine linear abgestufte Zunahme des eingestellten Drosselungsquerschnittes ergibt, wenn man die Sache ausgehend von der stärksten Drosselungsposition beziehungsweise der Absperrstellung betrachtet. Beim Ausführungsbeispiel können auf diese Weise insgesamt fünf mit den Buchstaben A bis E gekennzeichnete Grobpositionen eingestellt werden.

Der stufenlos beherrschbare Feineinstellbereich der Feineinstellmittel 38 ist in diesem Zusammenhang so gewählt, dass er der Differenz der Drosselungsquerschnitte entspricht, die zwischen zwei aufeinanderfolgenden Grobpositionen vorliegt, wenn man das Ganze bei gleicher Feineinstellung betrachtet. Zur besseren Orientierung beim Einstellvorgang enthalten die Feineinstellmittel 38 beim Ausführungsbeispiel eine von "null" bis "zehn" gehende Skala 42, an der man sich während des Einstellvorganges orientieren kann.

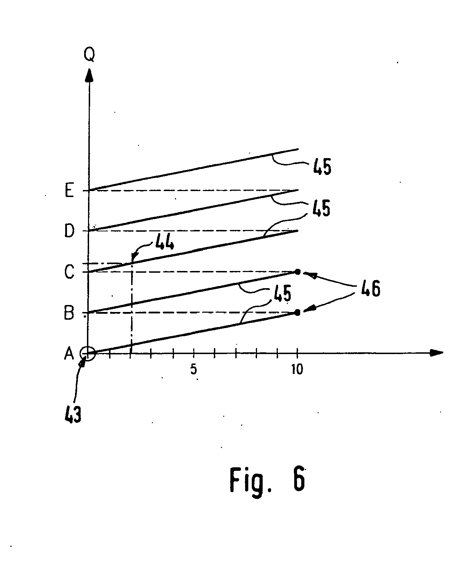

Das in Fig. 6 abgebildete Diagramm verdeutlicht die Betriebsweise des Drosselventils 1. Die vertikale Achse beschreibt hier die in Abhängigkeit von der eingestellten Drosselungsposition erhaltene Durchflussrate, während waagerecht der Feineinstellungsbereich aufgetragen ist. Liegt der momentane Feineinstellungswert bei null, entspricht der erzielbare Durchfluss demjenigen der momentan eingestellten Grobposition unter den möglichen Grobpositionen A bis E. Bei der gemäß Fig. 2 bis 4 getroffenen Einstellung liegt die der Absperrstellung entsprechende Drosselungsposition A vor, bei gleichzeitiger Null-Feineinstellung, sodass der realisierbare Durchfluss ebenfalls bei null liegt und man sich in dem Kennlinienfeld der Fig. 6 an der Stelle 43 befindet.

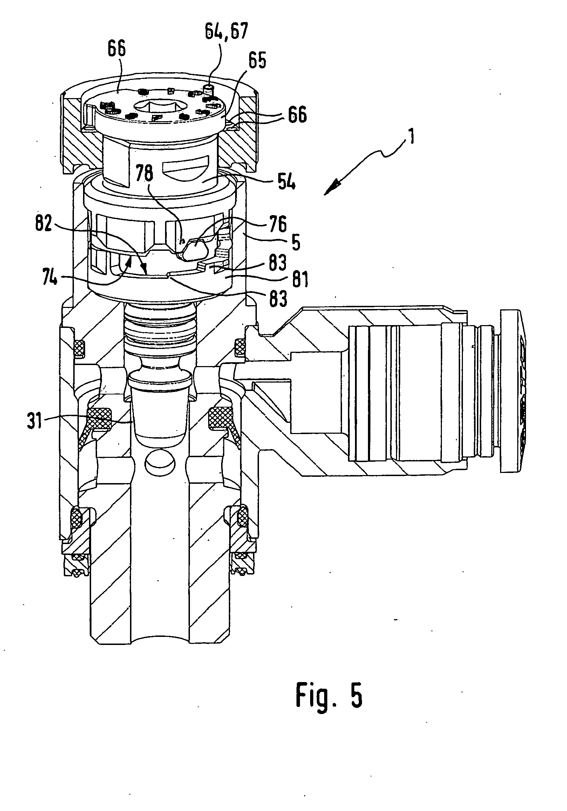

Soll hingegen ein Durchflusswert eingestellt werden, der der Stelle 44 entspricht, hat man die Grobposition C zu wählen, in Verbindung mit einer Feineinstellung gemäß Skalenwert "2". Die Fig. 5 zeigt das beispielsgemäße Drosselventil 1 bei einer solchen Einstellung.

Die schrägen, linearen Kennlinien 45 in dem Diagramm der Fig. 6 beschreiben die durch die Feineinstellung realisierbaren Durchflussänderungen. Man erkennt, dass der ausgehend von einer eingestellten Grobposition in Verbindung mit den Feineinstellungsmaßnahmen jeweils erzielbare Durchfluss-Maximalwert 46 dem Betrag entspricht, der mit der nächsthöheren Grobposition bei Null-Feineinstellung erzielbar ist. Auf diese Weise lässt sich das gesamte Durchflussspektrum von null bis zum absoluten Maximum stufenlos vorgeben, sodass man bei Bedarf ein proportionales Einstellverhalten realisieren kann.

Zur Erzeichterung der Einstellung sind zweckmäßigesweise miteinander kooperierende Ablesemitteln 47 vorhanden. Es handelt sich hierbei insbesondere um eine mit einem Zeiger 48 zusammenarbeitende Skala 49, wobei Letztere beim Ausführungsbeispiel die Buchstaben A bis E enthält. Bei Bedarf kann durch nicht näher gezeigte Rastmittel auch eine rastbare Stufenvorgabe vorgesehen werden.

Der Aufnahmeabschnitt 26 weist einen im Durchmesser erweiterten Endabschnitt 52 auf, in den ein als Hohlkörper ausgebildeter Drosselgliedträger 53 eintaucht, der von dem Drosselglied 28 koaxial durchsetzt ist. Ein bevorzugt hülsenförmiger Einstellabschnitt 54 des Drosselgliedträgers 53 steht mit dem Drosselglied 28 in Gewindeeingriff und besitzt zu diesem Zweck ein auf ein Außengewinde des Drosselgliedes 28 aufgeschraubtes Innengewinde 56. Die hierdurch erzielte Gewindeverbindung stellt zweckmäßigerweise ein sogenanntes Feingewinde mit geringer Gewindesteigung dar.

Über die Grobeinstellmittel 37 ist der Drosselgliedträger 53 bezüglich des Ventilgehäuses 2 in der Einstellrichtung grob verstellbar gelagert. Da das Drosselglied 28 über die Gewindeverbindung 55, 56 an ihm fixiert ist, macht es die grobe Verstellbewegung des Drosselgliedträgers stets direkt mit.

Die Grobeinstellung kann durch bezüglich des Ventilgehäuses 2 erfolgende mit einer Linear bewegung Kombinierte Drehbetätigung des Drosselgliedträgers 53 vorgenommen werden, während die Feineinstellung durch Drehbetätigung des Drosselgliedes 28 bezüglich des Drosselgliedträgers 53 erfolgt. Beide Einstellmaßnahmen haben die Einstellbewegung 34 des Drosselgliedes 28 bezüglich des Drosselkanals 25 zur Folge.

Zu seiner Drehbetätigung ist der Drosselgliedträger 53 mit einem außerhalb des Aufnahmeabschnittes 26 angeordneten, fest mit dem Einstellabschnitt 54 verbundenen Betätigungsabschnitt 58 versehen. Dieser ist dem kopfseitigen Endabschnitt 7 des Grundkörpers 5 zweckmäßigerweise axial vorgelagert. Beim Ausführungsbeispiel ist der Betätigungsabschnitt 58 ein ringförmiges Teil, das auf den Einstellabschnitt 54 drehfest aufgesteckt und durch Verrastung axial fixiert ist. Eine andere Befestigungsart wäre jedoch ebenfalls möglich. Ferner könnten der Betätigungsabschnitt 58 und der Einstellabschnitt 54 einstückig miteinander ausgebildet sein. Die Drehbetätigung kann manuell erfolgen. Bei Bedarf kann der Betätigungsabschnitt 58 auch genutzt werden, um den Drosselgliedträger 53 während der Feineinstellung des Drosselgliedes 28 unverdrehbar festzuhalten.

Miteinander kooperierende Ablesemittel 62 am Drosselglied 28 und am Drosselgliedträger 53 erleichtern die Feineinstellung. Beim Ausführungsbeispiel enthalten die Ablesemittel 62 die oben bereits angesprochene, beispielhaft aus Zahlen bestehende Skala 42 an der dem Drosselungsabschnitt 33 entgegengesetzten, frei zugänglichen Stirnseite 63 des Drosselgliedes 28 sowie einen neben der Skala 42 feststehend am Drosselgliedträger 53 angeordneten Zeiger 64. Der Zeiger 64 ist beim Ausführungsbeispiel ein Stift, der neben den Außenumfang des äußeren Endabschnittes 65 des Drosselgliedes 28 ragt. Entlang des Umfanges dieses Endabschnittes 65 verteilte bohrungsartige Befestigungsvertiefungen 66 ermöglichen beim Zusammenbau des Drosselventils 1 eine variable Positionierung des stiftartigen Zeigers 64.

Um eine reproduzierbare Feineinstellung zu ermöglichen, ist der Verdrehbereich des Drosselgliedes 28 bezüglich des Drosselgliedträgers 53 auf maximal eine Umdrehung beschränkt. In der Regel wird der Drehwinkel unter 360° liegen.

Die Beschränkung des Drehwinkels wird zweckmäßigerweise dadurch erreicht, dass der äußere Endabschnitt 65 des Drosselgliedes 28 mit einem Radialvorsprung 66 versehen ist, der bei der Drehbetätigung des Drosselgliedes 28 um die Längsachse 32 verschwenkt wird und in dessen Schwenkweg mindestens ein bezüglich des Drosselgliedträgers 53 feststehender Drehbegrenzungsanschlag 67 platziert ist. Bevorzugt wird der sowieso vorhandene Zeiger 64 als Drehbegrenzungsanschlag 67 herangezogen, der dabei die Drehbegrenzung bei beiden Drehrichtungen hervorrufen kann, indem der Radialvorsprung 66 entweder von der einen oder von der anderen Seite auf ihn aufläuft. Der einstellbare Drehwinkel liegt daher um das Breitenmaß des Radialvorsprunges 66 unter 360°.

Die für die Grobeinstellung nützlichen Ablesemittel 47 befinden sich einerseits am Drosselgliedträger 53 und andererseits am Ventilgehäuse 2. Die schon erwähnte Skala 49 befindet sich zweckmäßigerweise am Außenumfang des Betätigungsabschnittes 58, während der zugeordnete Zeiger 48 von einer Kante oder gesonderten Markierung am Außenumfang des kopfseitigen Endabschnittes 7 des Grundkörpers 5 gebildet ist.

Es versteht sich, dass bei beiden Ablesemitteln 47, 62 die Anordnung von Skala und Zeiger bezüglich der sie aufweisenden Komponenten auch vertauscht sein kann.

Wie schon erwähnt, ist der Drosselgliedträger 53 zur Grobeinstellung der Drosselungsintensität im Rahmen einer kombinierten Drehbewegung und linearen Einstellbewegung relativ zum Ventilgehäuse 2 verstellbar.

Bei der reinen Gewindeverbindung 55, 56 der Feineinstellmittel 38 kann durch eine vorgegebene Schwergängigkeit, beispielsweise durch geeignete Werkstoffauswahl oder Beschichtung, gewährleistet werden, dass die getroffene Einstellung allein aufgrund Reibschluss Bestand hat. Gleichwohl kann eine zusätzliche oder alternative Verrastungsmöglichkeit vorgesehen werden. Für die Einstellung des Drosselgliedes 28 würde hier eine relativ feine Teilung der Rastmittel zur Anwendung kommen, um weiterhin eine quasi stetige Einstellmöglichkeit zu gewährleisten Die Grobeinstellmittel 37 sind so ausgebildet, dass der Drosselgliedträger 53 relativ zum Ventilgehäuse 2 in der Einstellrichtung abgestuft in mehreren unterschiedlichen Axialpositionen positionierbar ist. Die Anordnung ist so getroffen, dass hinsichtlich des Durchflusses nur die diversen Stufen einstellbar sind und keine Zwischenstellungen.

Im Einzelnen ist bei dem Ausführungsbeispiel in dem Endabschnitt 52 des Aufnahmeabschnittes 26 ein für die Drehlagerung des Drosselgliedträgers 53 zuständiger Drehlagerring 73 koaxial eingesetzt, der den Einstellabschnitt 54 des Drosselgliedträgers 54 koaxial so umschließt, dass Letzterer unter Gewährleistung der Drehbeweglichkeit und auch axialen Verstellmöglichkeit zentriert ist.

An der dem Grund des Endabschnittes 54 zugewandten Stirnseite des Drehlagerringes 73 ist eine sich entlang des Außenumfanges des Drosselgliedträgers 53 erstreckende, axial orientierte Stufenkontur 74 vorhanden. Durch entsprechende gehäusefeste Fixierung des Drehlagerringes 73 ist auch eine gehäusefeste Fixierung der Stufenkontur 74 gewährleistet.

Die Stufenkontur 74 definiert mehrere in der Drehrichtung des Drosselgliedträgers 53 aufeinanderfolgend angeordnete, jeweils nach axial innen weisende Stufenflächen 75, die in der Einstellrichtung unterschiedlich weit vom Drosselkanal 25 beziehungsweise vom Grund des Endabschnittes 52 beabstandet sind.

Der Stufenkontur 74 axial in Richtung zum Drosselkanal 25 vorgelagert ist ein umfangsseitig radial vom Drosselgliedträger 53 wegragender Anschlag 76 vorhanden. Durch Verdrehen des Drosselgliedträgers 53 bewegt sich der Anschlag 76 entlang der Stufenkontur 74 und kann selektiv gegenüberliegend den einzelnen Stufenflächen 75 positioniert werden.

Durch sich am Ventilgehäuse 2 abstützende Federmittel 77 wird der Drosselgliedträger 53 ständig nach axial außen gerichtet beaufschlagt, sodass der vom Drosselgliedträger 53 getragene Anschlag 76 ständig gegen die Stufenkontur 74 vorgespannt ist. Das Zusammenwirken zwischen Anschlag 76 und Stufenkontur 74 definiert somit die momentane Axialposition des Drosselgliedträgers 53 und mithin die jeweilige Grobposition des Drosselgliedes 28.

Die Übergänge zwischen den einzelnen, für die Grobpositionen verantwortlichen Stufenflächen 75 können so gestaltet sein, dass aktiv eine reine Drehbetätigung des Drosselgliedträgers 53 ausreicht, um den Anschlag 76 längs der Stufenkontur 74 zu positionieren. Durch die Federmittel 77 ist jedoch gleichwohl die Möglichkeit geschaffen, die Drehbewegung zu erleichtern, indem der Drosselgliedträger 53 während des Verstellvorganges entgegen der Federkraft nach axial innen gedrückt werden kann, sodass der Anschlag 76 von der Stufenkontur 74 abhebt.

Diese Maßnahme empfiehlt sich besonders, wenn zwischen benachbarten Stufenflächen 75 axial vorstehende Begrenzungswände 78 vorhanden sind, die in Verbindung mit der Federvorspannung eine lösbar verrastende Fixierung des Anschlages 76 in der betreffenden Drehposition bewirken. Dadurch wird einem unbeabsichtigten Verstellen der Grobposition entgegengewirkt.

Die Federmittel 77 bestehen beim Ausführungsbeispiel aus einer den Schaft des Drosselgliedes 28 koaxial umschließenden Schraubendruckfeder, die außen von dem Einstellabschnitt 54 umschlossen ist und die sich einenends an der Grundfläche des Endabschnittes 52 abstützt, während sie andernends auf eine Abstufung am Innenumfang des Einstellabschnittes 54 einwirkt.

Beim Ausführungsbeispiel ist ein dem Drehlagerring 73 axial gegenüberliegender weiterer Ring 81 vorgesehen, der den Drosselgliedträger 53 koaxial umschließt und sich an der Grundfläche des Endabschnittes 52 abstützt. Er wird durch den vorgelagerten Drehlagerring 73 an Ort und Stelle gehalten.

An der der Stufenkontur 74 zugewandten Axialseite besitzt der weitere Ring 81 eine sich entlang des Außenumfanges des Drosselgliedträgers 53 erstreckende, axial orientierte, gehäusefeste Positionierstruktur 82. Sie flankiert den Anschlag 76 auf der der Stufenkontur 74 entgegengesetzten Axialseite. Insbesondere kann zwischen dem Drehlagerring 73 und dem weiteren Ring 81 ein sich in der Umfangsrichtung des Drosselgliedträgers 53 erstreckender Schlitz definiert sein, der axial zum einen von der Stufenkontur 74 und zum anderen von der Positionierstruktur 82 begrenzt ist.

Die Positionierstruktur 82 ist in ihrer Umfangsrichtung zweckmäßigerweise abgestuft, wobei sich die Anzahl der Stufen an der Anzahl der einstellbaren Grobpositionen orientiert. Jede Stufe definiert einen Gegenanschlag 83 in einem einer Stufenfläche 75 axial gegenüberliegenden Bereich.

Durch die Positionierstruktur 82 wird die Grobpositionierung des Drosselgliedes 28 vereinfacht. Zum Umschalten kann der Drosselgliedträger 53 entgegen der Federkraft so weit axial nach innen gedrückt werden, bis der Anschlag 76 an der Positionierstruktur 82 zur Anlage gelangt. Sodann kann der Drosselgliedträger 53 verdreht werden, bis der Anschlag 76 auf einen Gegenanschlag 83 aufläuft. Wird der Drosselgliedträger 53 dann losgelassen, wird der Anschlag 76 durch die Federmittel 77, insbesondere verrastend, gegen die zugeordnete Stufenfläche 75 gedrückt.

Die oben erwähnten, die Verrastung begünstigenden Begrenzungswände 78 können sowohl durch axiale Vorsprünge realisiert werden als auch durch eine im Drehlagerring 73 axial vertiefte Platzierung der zugeordneten Stufenfläche 75.

Von Vorteil ist es, wenn der Anschlag 76 eine sich zur Stufenkontur 74 hin verjüngende Gestalt hat und die Stufenkontur 74 am Grund einer sich zweckmäßigerweise ebenfalls entsprechend verjüngenden Vertiefung 79 angeordnet ist. Dadurch ergibt sich beim Eingriff eine automatische Zentrierung.

In diesem Zusammenhang ist es von Vorteil, wenn ein gegebenenfalls vorhandener Gegenanschlag 83 mit einer gewissen Überdeckung der zugehörigen Vertiefung gegenüberliegt. Dies hat zur Folge, dass der Anschlag 76 beim Herausbewegen aus der zugeordneten Vertiefung 79 nicht wieder vor den betreffenden Gegenanschlag 83 bewegt wird, sondern auf der darauffolgenden Stufe der Positionierstruktur 82 zu liegen kommt und somit beim anschließenden Drehvorgang direkt bis zum nächsten Gegenanschlag 83 weiter verdreht werden kann.

Verjüngt sich der Anschlag 76 zur Stufenkontur hin, ist der Eingriff in die zugeordnete Vertiefung 79 auch dann gewährleistet, wenn der Anschlag 76 aufgrund des Zusammenwirkens mit einem Gegenanschlag 83 der Vertiefung 79 nicht exakt axial gegenüberliegt.

Die Federmittel 77 stabilisieren die jeweils eingestellte Grobposition. Allerdings wird der Anschlag 76 über das am Drosselgliedträger 53 fixierte und von dem im Drosselkanal 25 herrschenden Druck beaufschlagte Drosselglied 28 auch durch den Fluiddruck gegen die Stufenkontur 74 angedrückt. Es kann daher unter Umständen sogar auf die Federmittel 77 verzichtet werden.

Ein Fluidaustritt im Bereich der Drosseleinrichtung 24 wird dadurch verhindert, dass das Drosselglied 28 auf der dem Drosselkanal 25 entgegengesetzten Seite im Anschluss an die Einmündungen der Querkanäle 27 einen mit der Wandung des Aufnahmeabschnittes 26 zusammenarbeitenden Dichtring 84 trägt.

Das Drosselventil 1 kann als reines Drosselventil ausgebildet sein. Viele Anwendungen verlangen jedoch eine kombinierte Drosselungs- und Rückschlagfunktion, wobei die Ausführungsbeispiele deutlich machen, dass man solchen Anforderungen Rechnung tragen kann, indem man über mindestens einen weiteren Querkanal 85 eine Fluidverbindung zwischen dem Ringraum 29 und dem dem Drosselkanal 25 vorgelagerten Abschnitt des ersten Anschlusskanals 23a vorsieht, in Verbindung mit einer Rückschlag-Dichtlippe 87, die in dem Ringraum 29 axial zwischen den Einmündungen der Querkanäle 27 und 85 platziert ist.

Die Rückschlag-Dichtlippe 87 ist am Grundkörper 5 fixiert und liegt dichtend an der Innenfläche des Lagerkörpers 12 an. Wird sie von der Rückseite her angeströmt, kann sie vom Lagerkörper 12 abheben und gibt den Fluiddurchtritt frei. Das Druckmedium kann dann unter Umgehung der Drosseleinrichtung 24 ungedrosselt zwischen den beiden Anschlusskanälen 23b, 23a überströmen. Bei einer Fluidströmung in Gegenrichtung verhindert die Rückschlag-Dichtlippe 87 den unmittelbaren Fluidübertritt zwischen den beiden Anschlusskanälen 23a, 23b, und das Fluid ist gezwungen, den Weg über die Drosseleinrichtung 24 zu nehmen.

An seiner von außen her zugänglichen Stirnseite 63 ist das Drosselglied 28 mit einer Werkzeugangriffspartie 88 versehen, an der sich ein Schraubwerkzeug für die Drehbetätigung des Drosselgliedes 28 ansetzen lässt. Es handelt sich hier beispielsweise um einen Innenmehrkant. Alternativ könnte der Endabschnitt des Drosselgliedes 28 auch so ausgebildet werden, dass eine unmittelbare manuelle Verstellung möglich ist. Für eine solche ist beim Ausführungsbeispiel der Drosselgliedträger 53 ausgebildet, der hierzu bequem an seinem Betätigungsabschnitt 58 erfasst werden kann.

## Patentansprüche

1. Drosselventil, mit einem Ventilgehäuse (2), das einen Drosselkanal (25) enthält, bezüglich dem ein Drosselglied (28) unter Ausführung einer die Drosselungsintensität beeinflussenden Einstellbewegung verstellbar ist, mit Grobeinstellmitteln (37) und Feineinstellmitteln (38) zur Grob- und Feineinstellung der Drosselungsintensität, die einstellungsmäßig auf das gleiche Drosselglied (28) wirken und bei vorgenommener Grobpositionierung des Drosselgliedes (28) eine darauf basierende Feinpositionierung des Drosselgliedes (28) ermöglichen, wobei das Drosselglied (28) an einem Drosselgliedträger (53) fein verstellbar gelagert ist und der Drosselgliedträger (53), unter Mitnahme des Drosselgliedes (28), bezüglich des Ventilgehäuses (2) grob verstellbar gelagert ist, **dadurch gekennzeichnet, dass** zumindest die Grobeinstellmittel (37) zur stufenweisen Grobeinstellung des Drosselgliedes (28) ausgebildet sind, indem der Drosselgliedträger (53) relativ zum Ventilgehäuse (2) in Richtung der Einstellbewegung abgestuft in mehreren unterschiedlichen Axialpositionen positionierbar ist, wobei der Drosselgliedträger (53) relativ zum Ventilgehäuse (2) in Richtung der Einstellbewegung linear verschiebbar und bezüglich der zugehörigen Bewegungsachse verdrehbar ist, wobei zur Grobeinstellung eine sich entlang des Außenumfanges des Drosselgliedträgers (53) erstreckende, axial orientierte, gehäusefeste Stufenkontur (74) vorhanden ist, der ein umfangsseitig am Drosselgliedträger (53) angeordneter Anschlag (76) axial gegenüberliegt, wobei der Anschlag (76) zur Vorgabe unterschiedlicher Grobpositionen durch Drehen des Drosselgliedträgers (53) wahlweise gegenüberliegend unterschiedlichen Stufenflächen (75) der Stufenkontur (74) positionierbar ist.

2. Drosselventil nach Anspruch 1, **dadurch gekennzeichnet, dass** das Drosselglied (28) in Abhängigkeit von der eingestellten Drosselungsintensität zur Vorgabe entsprechender Drosselungsquerschnitte unterschiedlich weit in den Drosselkanal (25) eintaucht.

3. Drosselventil nach Anspruch 2, **dadurch gekennzeichnet, dass** das Drosselglied (28) mit einem sich verjüngenden Drosselungsabschnitt (33) in den Drosselkanal (25) eintaucht.

4. Drosselventil nach einem der Ansprüche 1 bis 3, **dadurch gekennzeichnet, dass** das Drosselglied (28) mit dem Drosselgliedträger (53) in Gewindeeingriff (56, 57) steht, derart, dass das Drosselglied (28) durch relativ zum Drosselgliedträger (53) erfolgendes Verdrehen in Richtung der Einstellbewegung fein verstellbar ist.

5. Drosselventil nach Anspruch 4, **dadurch gekennzeichnet, dass** der Gewindeeingriff (55, 56) als sogenanntes Feingewinde ausgebildet ist.

6. Drosselventil nach Anspruch 4 oder 5, **dadurch gekennzeichnet, dass** der Verdrehbereich des Drosselgliedes (28) bezüglich des Drosselgliedträgers (53) auf maximal eine Umdrehung beschränkt ist.

7. Drosselventil nach Anspruch 6, **dadurch gekennzeichnet, dass** am Drosselglied (28) und am Drosselgliedträger (53) zum Ablesen des eingestellten Feineinstellungswertes miteinander kooperierende Ablesemittel (62), insbesondere in Gestalt einer am einen Teil angeordneten Skala (42) und eines am anderen Teil angeordneten Zeigers (64), vorgesehen sind.

8. Drosselventil nach einem der Ansprüche 1 bis 7, **dadurch gekennzeichnet, dass** der Drosselgliedträger (53) ein von dem Drosselglied (28) koaxial durchsetzter Hohlkörper ist.

9. Drosselventil nach Anspruch 8, **dadurch gekennzeichnet, dass** sich die am Drosselglied (28) vorgesehenen Ablesemittel (62, 42) an der dem Drosselungsabschnitt (33) entgegengesetzten Stirnseite (63) des Drosselgliedes (28) befinden.

10. Drosselventil nach einem der Ansprüche 1 bis 9, **dadurch gekennzeichnet, dass** das Drosselglied (28) und/oder der Drosselgliedträger (53) in mehreren einstellbaren Positionen lösbar verrastbar sind.

11. Drosselventil nach einem der Ansprüche 1 bis 10, **dadurch gekennzeichnet, dass** Federmittel (77) vorhanden sind, durch die der Anschlag (76) ständig in Richtung der Stufenkontur (74) vorgespannt ist.

12. Drosselventil nach Anspruch 11, **dadurch gekennzeichnet, dass** die Stufenkontur (74) Bestandteil eines in das Ventilgehäuse (2) eintauchenden, den Drosselgliedträger (53) koaxial umschließenden Drehlagerringes (73) für den Drosselgliedträger (53) ist.

13. Drosselventil nach einem der Ansprüche 1 bis 12, **dadurch gekennzeichnet, dass** auf der der Stufenkontur (74) axial entgegengesetzten Seite des Anschlages (76) eine gehäusefeste Positionierstruktur (82) vorhanden ist, die durch Zusammenwirken mit dem Anschlag (76) zur Vorgabe von Drehpositionen für den Drosselgliedträger (53) dient, in denen der Anschlag (76) jeweils einer Stufenfläche (75) der Stufenkontur (74) axial gegenüberliegt.

14. Drosselventil nach Anspruch 13, **dadurch gekennzeichnet, dass** die Positionierstruktur (82) Bestandteil eines im Ventilgehäuse (2) fixierten, den Drosselgliedträger (53) koaxial umschließenden Ringes ist.

15. Drosselventil nach einem der Ansprüche 1 bis 14, **dadurch gekennzeichnet, dass** mindestens eine Stufenfläche (75) am Grund einer durch seitliche Begrenzungswände (78) begrenzten Vertiefung (79) vorgesehen ist, in die der Anschlag (76) eintauchen kann.

16. Drosselventil nach einem der Ansprüche 1 bis 15, **dadurch gekennzeichnet, dass** der Anschlag (76) eine sich in Richtung der Stufenkontur (74) verjüngende Gestalt hat.

17. Drosselventil nach einem der Ansprüche 1 bis 16, **dadurch gekennzeichnet, dass** zum einen am Drosselgliedträger (53) und zum anderen ventilgehäusefest zum Ablesen des eingestellten Grobeinstellungswertes miteinander kooperierende Ablesemittel (47), insbesondere in Gestalt einer am einen Teil angeordneten Skala (49) und eines am anderen Teil angeordneten Zeigers (48), vorgesehen sind.

18. Drosselventil nach einem der Ansprüche 1 bis 17, **dadurch gekennzeichnet, dass** das Drosselglied (28) durch die Grobeinstellmittel (37) in mehreren Grobpositionen positionierbar ist, wobei der Feineinstellbereich der Feineinstellmittel (38) so gewählt ist, dass er der Differenz der bei gleicher Feineinstellung durch die jeweils aufeinanderfolgenden Grobpositionen jeweils vorgegebenen Drosselungsquerschnitte entspricht.

19. Drosselventil nach einem der Ansprüche 1 bis 18, **gekennzeichnet durch** ein Ventilgehäuse mit einem ersten und einem zweiten Anschlusskanal (23a, 23b) zur Zufuhr beziehungsweise Abfuhr eines zu drosselnden Fluides.

20. Drosselventil nach Anspruch 19, **dadurch gekennzeichnet, dass** das Ventilgehäuse (2) einen die Grob- und Feineinstellmittel (37, 38) sowie den einen Anschlusskanal (23a) aufweisenden Grundkörper (5) und ein an dem Grundkörper (5) drehbar gelagertes, den anderen Anschlusskanal (23b) aufweisendes Schwenkteil (13) besitzt.

## Claims

1. Restrictor valve, comprising a valve housing (2) containing a restrictor channel (25) with respect to which a restrictor member (28) is adjustable while performing a movement of adjustment influencing the intensity of restriction, comprising coarse adjustment means (37) and fine adjustment means (38) for the coarse and fine adjustment of the intensity of restriction, which means act in accordance with the setting on the same restrictor member (28) and allow, once the restrictor member (28) has been coarsely positioned, fine positioning of the restrictor member (28) based thereon, the restrictor member (28) being mounted on a restrictor member carrier (53) so as to be finely adjustable and the restrictor member carrier (53) being mounted, with entrainment of the restrictor member (28), so as to be coarsely adjustable with respect to the valve housing (2), **characterised in that** at least the coarse adjustment means (37) are configured for stepwise coarse adjustment of the restrictor member (28) **in that** the restrictor member carrier (53) can be positioned relative to the valve housing (2) in the direction of the movement of adjustment so as to be graded in a plurality of differing axial positions, the restrictor member carrier (53) being linearly displaceable relative to the valve housing (2) in the direction of the movement of adjustment and rotatable with respect to the associated axis of movement, there being provided for the coarse adjustment an axially oriented stepped contour (74) which extends along the external circumference of the restrictor member carrier (53), is secured to the housing and is axially opposed by a stop (76) which is arranged on the restrictor member carrier (53) on the circumferential side, wherein the stop (76) can be positioned for defining differing coarse positions by rotating the restrictor member carrier (53) optionally opposing differing stepped surfaces (75) of the stepped contour (74).

2. Restrictor valve according to claim 1, **characterised in that** the restrictor member (28) dips into the restrictor channel (25) to differing depth as a function of the set intensity of restriction for defining corresponding restriction cross sections.

3. Restrictor valve according to claim 2, **characterised in that** the restrictor member (28) dips into the restrictor channel (25) with a tapering restriction portion (33).

4. Restrictor valve according to any one of claims 1 to 3, **characterised in that** the restrictor member (28) is in threaded engagement (56, 57) with the restrictor member carrier (53) in such a way that the restrictor member (28) can be finely adjusted by rotation carried out relative to the restrictor member carrier (53) in the direction of the movement of adjustment.

5. Restrictor valve according to claim 4, **characterised in that** the threaded engagement (55, 56) is in the form of what is known as a fine thread.

6. Restrictor valve according to either claim 4 or claim 5, **characterised in that** the rotational region of the restrictor member (28) is restricted with respect to the restrictor member carrier (53) to at most one revolution.

7. Restrictor valve according to claim 6, **characterised in that** mutually cooperating gauge means (62), in particular in the form of a scale (42) arranged on one portion and an indicator (64) arranged on the other portion, are provided on the restrictor member (28) and on the restrictor member carrier (53) for gauging the set fine adjustment value.

8. Restrictor valve according to any one of claims 1 to 7, **characterised in that** the restrictor member carrier (53) is a hollow body coaxially penetrated by the restrictor member (28).

9. Restrictor valve according to claim 8, **characterised in that** the gauge means (62, 42) provided on the restrictor member (28) are located on the end face (63) of the restrictor member (28) that opposes the restriction portion (33).

10. Restrictor valve according to any one of claims 1 to 9, **characterised in that** the restrictor member (28) and/or the restrictor member carrier (53) can be releasably locked in a plurality of adjustable positions.

11. Restrictor valve according to any one of claims 1 to 10, **characterised in that** there are provided spring means (77) by which the stop (76) is biased at all times in the direction of the stepped contour (74).

12. Restrictor valve according to claim 11, **characterised in that** the stepped contour (74) is part of a pivot bearing ring (73), which dips into the valve housing (2) and coaxially surrounds the restrictor member carrier (53), for the restrictor member carrier (53).

13. Restrictor valve according to any one of claims 1 to 12, **characterised in that** there is provided on the side of the stop (76) axially opposing the stepped contour (74) a positioning structure (82) which is secured to the housing and acts, by cooperating with the stop (76), to define rotational positions for the restrictor member carrier (53) in which the stop (76) axially opposes a respective stepped surface (75) of the stepped contour (74).

14. Restrictor valve according to claim 13, **characterised in that** the positioning structure (82) is part of a ring which is fixed in the valve housing (2) and coaxially surrounds the restrictor member carrier (53).

15. Restrictor valve according to any one of claims 1 to 14, **characterised in that** at least one stepped surface (75) is provided on the base of an indentation (79) which is delimited by lateral delimiting walls (78) and into which the stop (76) is able to dip.

16. Restrictor valve according to any one of claims 1 to 15, **characterised in that** the stop (76) tapers in the direction of the stepped contour (74).

17. Restrictor valve according to any one of claims 1 to 16, **characterised in that** mutually cooperating gauge means (47), in particular in the form of a scale (49) arranged on one portion and an indicator (48) arranged on the other portion, are, on the one hand, provided on the restrictor member carrier (53) and, on the other hand, secured to the valve housing for gauging the set coarse adjustment value.

18. Restrictor valve according to any one of claims 1 to 17, **characterised in that** the restrictor member (28) can be positioned by the coarse adjustment means (37) in a plurality of coarse positions, the fine adjustment range of the fine adjustment means (38) being selected so as to correspond to the difference in the restriction cross sections respectively defined in the event of identical fine adjustment through the respectively successive coarse positions.

19. Restrictor valve according to any one of claims 1 to 18, **characterised by** a valve housing comprising a first and a second connection channel (23a, 23b) for the supply or removal of a fluid to be restricted.

20. Restrictor valve according to claim 19, **characterised in that** the valve housing (2) has a basic element (5) comprising the coarse and fine adjustment means (37, 38) and also the one connection channel (23a) and a pivot portion (13) which is rotatably mounted on the basic element (5) and comprises the other connection channel (23b).

## Revendications

1. Soupape d'étranglement, avec un carter de soupape (2) contenant un canal d'étranglement (25), par rapport auquel un élément d'étranglement (28) est réglable par exécution d'un mouvement de réglage influençant l'intensité d'étranglement, avec des moyens de réglage grossier (37) et des moyens de réglage de précision (38) pour le réglage grossier et le réglage de précision de l'intensité d'étranglement, qui agissent par réglage sur le même élément d'étranglement (28) et, en cas de positionnement grossier exécuté pour l'élément d'étranglement (28), permettent sur cette base un positionnement précis de l'élément d'étranglement (28), ledit élément d'étranglement (28) étant monté sur un support d'élément d'étranglement (53) et réglable avec précision, et ledit support d'élément d'étranglement (53) étant monté réglable grossièrement par rapport au carter de soupape (2) en entraînant l'élément d'étranglement (28), **caractérisée en ce qu'**au moins les moyens de réglage grossier (37) sont réalisés pour un réglage grossier graduel de l'élément d'étranglement (28), le support d'élément d'étranglement (53) étant positionnable graduellement dans plusieurs positions axiales différenciées relativement au carter de soupape (2) dans la direction du mouvement de réglage, le support d'élément d'étranglement (53) étant déplaçable linéairement relativement au carter de soupape (2) dans la direction du mouvement de réglage et rotatif par rapport à l'axe de déplacement correspondant, un contour à gradins (74) fixe sur le carter, orienté dans le sens axial et s'étendant le long de la circonférence extérieure du support d'élément d'étranglement (53) étant présenté pour le réglage grossier, auquel est axialement opposée une butée (76) disposée sur la circonférence du support d'élément d'étranglement (53), ladite butée (76) étant positionnable pour la fixation de différentes positions grossières par rotation sélective du support d'élément d'étranglement (53) en face de différentes surfaces étagées (75) du contour à gradins (74).

2. Soupape d'étranglement selon la revendication 1, **caractérisée en ce que** l'élément d'étranglement (28) s'enfonce à des positions différenciées dans le canal d'étranglement (25) en fonction de l'intensité d'étranglement réglée pour la fixation de sections d'étranglement correspondantes.

3. Soupape d'étranglement selon la revendication 2, **caractérisée en ce que** l'élément d'étranglement (28) s'enfonce dans le canal d'étranglement (25) avec une partie d'étranglement (33) en cône.

4. Soupape d'étranglement selon l'une des revendications 1 à 3, **caractérisée en ce que** l'élément d'étranglement (28) est en contact fileté (56, 57) avec le support d'élément d'étranglement (53), de manière à pouvoir régler avec précision l'élément d'étranglement (28) par rotation exécutée relativement au support d'élément d'étranglement (53) dans la direction du mouvement de réglage.

5. Soupape d'étranglement selon la revendication 4, **caractérisée en ce que** le contact fileté (55, 56) est réalisé comme filet dit à pas fin.

6. Soupape d'étranglement selon la revendication 4 ou 5, **caractérisée en ce que** la plage de rotation de l'élément d'étranglement (28) par rapport au support d'élément d'étranglement (53) est limitée à un tour au maximum.

7. Soupape d'étranglement selon la revendication 6, **caractérisée en ce que** des moyens de lecture (62) coopérant entre eux, en particulier sous la forme d'une graduation (42) disposée sur une pièce et d'un indicateur (64) disposé sur l'autre pièce, sont prévus sur l'élément d'étranglement (28) et sur le support d'élément d'étranglement (53) pour la lecture de la valeur de réglage de précision réglée.

8. Soupape d'étranglement selon l'une des revendications 1 à 7, **caractérisée en ce que** le support d'élément d'étranglement (53) est un corps creux traversé coaxialement par l'élément d'étranglement (28).

9. Soupape d'étranglement selon la revendication 8, **caractérisée en ce que** les moyens de lecture (62, 42) prévus sur l'élément d'étranglement (28) sont situés sur la face frontale (63) de l'élément d'étranglement (28) opposée à la partie d'étranglement (33).

10. Soupape d'étranglement selon l'une des revendications 1 à 9, **caractérisée en ce que** l'élément d'étranglement (28) et/ou le support d'élément d'étranglement (53) sont enclenchables et déclenchables dans plusieurs positions réglables.

11. Soupape d'étranglement selon l'une des revendications 1 à 10, **caractérisée en ce que** des moyens à ressort (77) sont présentés, au moyen desquels la butée (76) est constamment précontrainte dans la direction du contour à gradins (74).

12. Soupape d'étranglement selon la revendication 11, **caractérisée en ce que** le contour à gradins (74) est un composant d'une bague de coussinet de pivotement (73) pour le support d'élément d'étranglement (53), plongeant dans le carter de soupape (2) et entourant coaxialement le support d'élément d'étranglement (53).

13. Soupape d'étranglement selon l'une des revendications 1 à 12, **caractérisée en ce qu'**une structure de positionnement (82) fixe sur le carter est présentée sur la face de la butée (76) axialement opposée au contour à gradins (74), laquelle sert en coopérant avec la butée (76) à fixer les positions pour le support d'élément d'étranglement (53) dans lesquelles la butée (76) est axialement opposée à une surface étagée (75) du contour à gradins (74).

14. Soupape d'étranglement selon la revendication 13, **caractérisée en ce que** la structure de positionnement (82) est un composant d'une bague fixée dans le carter de soupape (2) et entourant coaxialement le support d'élément d'étranglement (53).

15. Soupape d'étranglement selon l'une des revendications 1 à 14, **caractérisée en ce qu'**au moins une surface étagée (75) est prévue sur le fond d'un évidement (79) délimité par des parois de limitation (78) latérales, où la butée (76) peut s'enfoncer.

16. Soupape d'étranglement selon l'une des revendications 1 à 15, **caractérisée en ce que** la butée (76) présente une forme effilée vers le contour à gradins (74).

17. Soupape d'étranglement selon l'une des revendications 1 à 16, **caractérisée en ce que** des moyens de lecture (47) coopérant entre eux, en particulier sous la forme d'une graduation (49) disposée sur une pièce et d'un indicateur (48) disposé sur l'autre pièce, sont prévus sur le support d'élément d'étranglement (53), d'une part, et fixe sur le carter, d'autre part, pour la lecture de la valeur de réglage grossier réglée.

18. Soupape d'étranglement selon l'une des revendications 1 à 17, **caractérisée en ce que** l'élément d'étranglement (28) est positionnable par les moyens de réglage grossier (37) dans plusieurs positions grossières, la plage de réglage de précision des moyens de réglage de précision (38) étant sélectionnée de manière à correspondre à la différence des sections d'étranglement définies par les positions grossières consécutives pour un même réglage de précision.

19. Soupape d'étranglement selon l'une des revendications 1 à 18, **caractérisée par** un carter de soupape avec un premier et un deuxième canal de raccordement (23a, 23b) pour l'amenée ou l'évacuation d'un fluide à étrangler.

20. Soupape d'étranglement selon la revendication 19, **caractérisée en ce que** le carter de soupape (2) comprend un corps de base (5) comportant les moyens de réglage grossier et de réglage de précision (37, 38) ainsi que le premier canal de raccordement (23a), et une pièce pivotante (13) rotative sur le corps de base (5), comportant l'autre canal de raccordement (23b).
